Europäisches Patentamt

(19) European Patent Office

Office européen des brevets

(11) Veröffentlichungsnummer: **0 272 454**
B1

# (12) EUROPÄISCHE PATENTSCHRIFT

(45) Veröffentlichungstag der Patentschrift:
18.07.90

(51) Int. Cl.⁵: **B60J 5/04**, E04C 2/20, E06B 3/72

(21) Anmeldenummer: 87116975.1

(22) Anmeldetag: 17.11.87

(54) **Leichtbauelement.**

(30) Priorität: 21.11.86 CH 4669/86

(43) Veröffentlichungstag der Anmeldung:
29.06.88 Patentblatt 88/26

(45) Bekanntmachung des Hinweises auf die Patenterteilung:
18.07.90 Patentblatt 90/29

(84) Benannte Vertragsstaaten:
AT BE CH DE FR GB IT LI NL SE

(56) Entgegenhaltungen:
DE-A- 2 301 814
DE-A- 2 343 366
DE-A- 2 412 692
FR-A- 2 416 332
FR-E- 77 763
GB-A- 1 140 311
US-A- 3 791 693

(73) Patentinhaber: LONZA AG, Gampel/Wallis(CH)

(72) Erfinder: Rysavy, Peter, Hangstrasse 3, Schlieren Zürich(CH)
Erfinder: Baumann, Hansjörg Walter, Dipl.-Chem. HTL, Bahnhofstrasse, Mühlau Aargau(CH)

(74) Vertreter: Weinhold, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues Leichtbauelement, insbesondere für Türkonstruktionen von Fahrzeugen.

Die technischen Anforderungen, die an Leichtbauelemente, insbesondere für Konstruktionen von Fahrzeugtüren, gestellt werden, sind verschiedener Art. Neben wenig Gewicht, sollen sie selbsttragend und korrosionsbeständig sein, einen minimalen Verzug - auch bei intensiver Sonnenbestrahlung - haben; sie sollen ferner geeignet sein, in grossformatiger und gebogener Fläche verarbeitet zu werden.

Alle diese Eigenschaften weisen die neuen Leichtbauelemente gemäss der Erfindung auf.

Diese Elemente sind gekennzeichnet durch Patentanspruch 1.

Als tragender Kern kommen Schaumstoffplatten aus zähhartem Material zur Anwendung, vorzugsweise wird geschlossenzelliger PVC-Schaumstoff verwendet mit Raumgewicht von 70 bis 90 kg/m3. Die Dicke dieses Kerns kann den Anforderungen entsprechend variieren. Zweckmässig wird eine Dicke von 20 bis 35 mm, vorzugsweise eine Dicke von 25 bis 28 mm gewählt.

Das elastische Material besteht zweckmässig aus weichgemachtem Polyvinylchloridschaum oder aus Polyethylenschaum mit Raumgewichten von 30 bis 60 kg/m3, vorzugsweise wird Polyethylenschaum eingesetzt.

Die Dicke des elastischen Materials kann den Anforderungen entsprechend variieren. Die Dicke des elastischen Materials ist kleiner als die des tragenden Kerns. Vorzugsweise beträgt die Dicke 8 bis 10 mm.

Zwischen den genannten Schaummaterialien ist eine Zwischendeckschicht angeordnet, die durch Verkleben an den Flächen der beiden Schaumstoffkerne fixiert ist. Zweckmässig wird ein 2-Komponenten-Kleber auf Polyurethanbasis oder Epoxybasis angewendet.

In dieses Doppelsandwichmaterial werden Hohlräume zur Einbringung von Beschlägen, die zur Aufnahme von Krafteinleitungen dienen, ausgespart. Die Hohlräume müssen so beschaffen sein, dass die Beschläge von der Seite des hartzähen Materials ausgehend bis hinein in elastisches Material eingesetzt werden können. Vorteilhaft gehen die Beschläge bis etwa zu der halben Dicke des elastischen Materials.

Die Beschläge dienen zur Aufnahme von Krafteinleitungen. Solche sind beispielsweise Flügeltüraufhängungen, Verriegelungseinrichtungen, Dichtungsträger usw.

Die Beschläge bestehen zweckmässig aus Leichtmetall oder nichtrostendem Stahl.

Das Doppelsandwichelement inklusive Beschläge ist beidseitig mit Deckschichten versehen. Diese Deckschichten sowie die Zwischendeckschicht zwischen hartzähem und elastischem Material können aus faserverstärkten Kunststoffen, z.B. glasfaser verstärkt, mit einer Dicke von 1 bis 2,5 mm oder Metallen mit einer Dicke von 0,8 bis 1,5 mm, vorzugsweise aus Aluminium, bestehen. Diese Deckschichten sind flächig mit dem Doppelsandwich durch Verkleben, z.B. mit 2-Komponenten-Kleber, verbunden. Durch diese Anordnung ist die Deckschicht mit dem flexiblen Material schwimmend verbunden. Zweckmässig wird zusätzlich die Deckschicht am flexiblen Schaumstoffmaterial noch an zwei benachbarten, sich berührenden Kanten fixiert.

Durch diese Massnahme ist es möglich, bei Beschädigung der äusseren Deckschicht, diese ohne Zerstörung oder Beschädigung des ganzen Leichtbauelementes zu ersetzen.

Dieses erfindungsgemässe Leichtbauelement besitzt weitere gewünschte Eigenschaften:
- selbsttragend
- leicht
- gute thermische und akustische Isolation
- korrosionsbeständig
- minimaler Verzug bei intensiver Sonnenbestrahlung
- geeignet für grossformatige Elemente
- geeignet für gebogene Elemente

Die Erfindung wird anhand des nachstehenden Beispiels erläutert:

In Fig. 1 ist eine Fahrzeugflügeltür dargestellt.

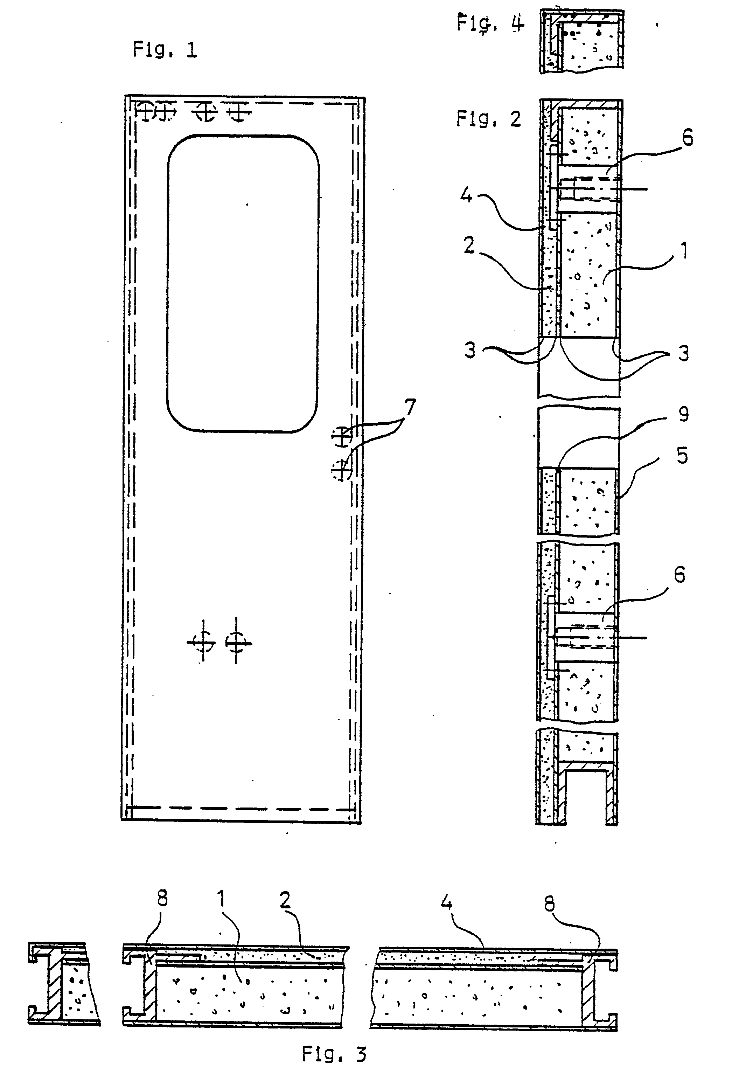

In den Fig. 2 und 3 sind Schnitte dieser Flügeltür dargestellt. Das Leichtbauelement besteht aus einem tragenden Schaumstoffkern 1 aus zähhartem, geschlossenzelligen PVC-Schaumstoff mit einem Raumgewicht von 80 kg/m3 und einer Dicke von 25 mm und einem elastischen Schaumstoffkern 2 aus Polyethylenschaumstoff mit einem Raumgewicht von 30 kg/m3 und einer Dicke von 8 mm. Diese Schaumstoffkerne sind mittels Kleberschichten 3 mit der Zwischendeckschicht 9 und den Deckschichten 4 und 5 aus Aluminium (1 mm Dicke) flächig verbunden. Im Doppelsandwichelement befinden sich Beschläge 6 für die Flügeltüraufhängung und Beschläge 7 für die Verriegelungseinrichtung. Im Element sind 8 die Profile für die Aufnahme von Dichtungsprofilen.

In Fig. 4 ist die Fixierung der äusseren Deckschicht durch Umbiegen und Abkanten der Deckschicht über eine Kante dargestellt.

## Patentansprüche

1. Leichtbauelement insbesondere für Türkonstruktionen von Fahrzeugen, gekennzeichnet durch einen tragenden Kern (1) aus zähhartem Schaumstoff, einen an einer Seite mit dem tragenden Kern mittels einer Zwischendeckschicht (9) flächig verbundenen Schaumstoffkern (2) aus elastischem Material, mehreren von der Seite des tragenden Kerns (1) ausgehend durch diesen bis in den Kern (2) aus elastischem Material hineinreichende Beschläge (6, 7) zur Aufnahme von Krafteinleitungen und flächig mit dem Schaumstoffmaterial verbundene Deckschichten (4, 5) an den beiden äusseren Seiten des Kernmaterials, wobei diese Deckschichten (4, 5) auch zur Abdeckung der Beschläge dienen.

2. Leichtbauelement nach Patentanspruch 1, dadurch gekennzeichnet, dass der tragende Kern (1) aus geschlossenzelligem PVC-Schaumstoff besteht.

3. Leichtbauelement nach Patentansprüchen 1 und 2, dadurch gekennzeichnet, dass das elastische Material (2) aus Polyethylenschaum besteht.

4. Leichtbauelement nach Patentansprüchen 1 bis 3, dadurch gekennzeichnet, dass die zwischen tragendem Kern (1) aus zähhartem Schaumstoff und elastischem Material (2) befindliche Zwischendeckschicht (9) und die äusseren Deckschichten (4, 5) durch Verkleben (3) mit diesen Schaumstoffkernen (1, 2) verbunden sind.

5. Leichtbauelement nach Patentansprüchen 1 bis 4, dadurch gekennzeichnet, dass die sich am elastischen Schaumstoff (2) befindende Deckschicht (4) zusätzlich an zwei benachbarten Kanten fixiert ist.

**Claims**

1. A light-weight structural member, particularly for the construction of vehicle doors, characterized by:
    a supporting core (1) of hard tough foam material;
    a foam core (2) of elastic material laminated by means of an intermediate layer (9) to one surface of said supporting core; several fittings (6, 7) for the insertion of force transferring means, said fittings extending from the side of the supporting core (1) through said core and into the core (2) of elastic material; and surface layers (4, 5) laminated to the outer faces of the foam material, said surface layers (4, 5) also serving to cover said fittings (6, 7).

2. The light-weight structural member according to Claim 1 characterized in that the supporting core (1) consists of a closed-cell PVC foam.

3. The light-weight structural member according to Claim 1 and 2 characterized in that the elastic material (2) consists of polyethylene foam.

4. The light-weight structural member according to any one of Claims 1 to 3 characterized in that the intermediate layer (9) disposed between the supporting core (1) of hard tough foam and the elastic material (2), as well as the outer surface layers (4, 5) are bound to said cores of foam materials (1, 2) by means of an adhesive (3).

5. The light-weight structural member according to any one of Claims 1 to 4 characterized in that the surface e layer (4) adhering to the elastic foam (2) is additionally fixed to two neighboring edges.

**Revendications**

1. Elément de construction léger notamment pour portes de véhicules, caractérisé par un noyau porteur (1) réalisé à partir d'un produit alvéolaire dur, un noyau en matière alvéolaire (2) fixé en affleurement sur un côté avec le noyau porteur au moyen d'une couche intermédiaire 9, en matériau élastique, plusieurs armatures ou ferrures (6, 7) s'étendant depuis le côté du noyau porteur 1 jusque dans le noyau 2 en matériau élastique pour le logement des ferrures et en affleurement avec les couches de revêtement 4 et 5 en matériau de produit alvéolaire sur les deux côtés extérieurs du matériau de noyau, ces couches de revêtement (4, 5) servant également à recouvrir les ferrures.

2. Elément de construction léger selon la revendication 1, caractérisé en ce que les noyaux porteurs 1 consistent en un produit alvéolaire PVC à cellules fermées.

3. Elément de construction léger selon les revendications 1 et 2, caractérisé en ce que le matériau élastique (2) est réalisé à partir de mousse de polyéthylène.

4. Elément de construction léger selon les revendications 1 à 3, caractérisé en ce que la couche intermédiaire 9 se trouvant entre le noyau porteur (1) en matière alvéolaire dure et le matériau élastique (2) et les couches de revêtement extérieur (4, 5) sont fixées par collage (3) aux noyaux en matière alvéolaire (1, 2).

5. Elément de construction léger selon les revendications 1 à 4, caractérisé en ce que la couche de revêtement (4) se trouvant sur le produit alvéolaire élastique (2) est de plus fixée sur deux bords attenants.

Fig. 1

Fig. 4

Fig. 2

Fig. 3